Europäisches Patentamt

(19) **European Patent Office**

Office européen des brevets

(11) Publication number: **0 099 651**
**A2**

(12) # EUROPEAN PATENT APPLICATION

(21) Application number: **83303492.9**

(22) Date of filing: **19.07.82**

(51) Int. Cl.³: **G 06 K 1/12**

(30) Priority: **23.07.81 GB 8122737**

(43) Date of publication of application:
**01.02.84 Bulletin 84/5**

(84) Designated Contracting States:
**AT BE CH DE FR GB IT LI LU NL SE**

(60) Publication number of the earlier application
in accordance with Art. 76 EPC: **0 071 377**

(71) Applicant: **PA Management Consultants Limited**
**Hyde Park House 60a Knightsbridge**
**London SW1X 7LE(GB)**

(72) Inventor: **Pettigrew, Robert Martin**
**Pound Cottage High Street**
**Foxton Cambridgeshire(GB)**

(72) Inventor: **Bradbrook, John Douglas**
**56 Downlands**
**Royston Hertfordshire(GB)**

(72) Inventor: **Wainwright, Ronald Corbett**
**Chauffeurs Cottage Aston Lane Bragbury End**
**Stevenage Hertfordshire(GB)**

(74) Representative: **Godsill, John Kenneth et al,**
**Haseltine Lake & CO. Hazlitt House 28 Southampton**
**Buildings Chancery Lane**
**London WC2A 1AT(GB)**

(54) Optical data storage.

(57) A data storage member (1) comprises recording material
for recording information (5) which can be imaged using
non-coherent light and, in addition to and distinct from that
information, the member has control data (7, 8, 9) which
defines a two-co-ordinate system for the member to provide
for random access to the information. A reading·recording
apparatus comprises a non-laser optical system for imaging
onto selected areas and a servo-system, including a micro-
processor and transducers, for reading the control data and
for positioning a head of the optical system in desired
locations relative to the storage member.

The invention affords cheap optical data bases record-
able and readable by apparatus not requiring a laser optical
system.

FIG. I.

- 1 -

OPTICAL DATA STORAGE

The present invention relates to optical data storage systems and specifically to recording apparatus, for example as disclosed in PCT application GB/82/001790.

A conventional microfiche system comprises an optical data processing apparatus for processing information storage areas in an optical data storage zone of an optical storage member (microfiche), the apparatus comprising processing means for use in processing said areas and drive means for producing relative motion between the storage member and the processing means to position the processing means to process any desired one of said areas. The processing means comprises an imaging system for magnifying an image at one of the areas, and the drive means comprises a 'joy' stick or the like for manuallly selecting areas for display.

U.S. Patent No. 4179743 discloses another such system, but wherein control data for use in locating areas is distributed amongst the areas, the control data containing classifying data pertaining to the areas and being intrinsically ordered. Such a system can only be used for pre-ordered data such as a dictionary in alphabetical order. Storage space is limited by distributing the control data through the storage zone.

European application No. 81300321.7 describes a reading system wherein an optical data storage member carries its own two-dimensional positional, absolute and incremental, control data in areas distinct from the storage zone in order that a positional servo can accurately position a processing head relative to the storage member. In that application, the processing head is an optical imaging system for image display, but it could equally be an optical imaging system for image recording on sensitive material of the storage member.

It is now proposed to apply such concepts to a recording apparatus but to dispense with one of the co-ordinate positional sets of incremental data because it has been discovered that sufficient accuracy is achieved from one co-ordinate defined incrementally on the storage member and its second co-ordinate defined incrementally by the processing apparatus itself.

Thus according to one aspect of the invention there is provided an optical data recording apparatus for applying images to information storage areas in an optical data storage zone of an optical storage member, the apparatus comprising processing means for use in applying images to said areas of the storage zone, and drive means for producing relative motion between the storage member and the processing means to position the processing means to process any desired one of said areas,

characterised in that the processing apparatus comprises desired value means for defining desired values for the first and second co-ordinates of an area to be processed, first actual value means for reading control data provided by a storage member to define an actual value for the relative motion in one co-ordinate direction, second actual value means for reading incremental positional control data, which is independent of the storage member, to define an actual value for the relative motion in the other co-ordinate direction, and servo means for operating the drive means in dependence upon the desired and actual values to cause the processing means to be positioned relative to the storage member for processing the area defined by the desired values.

In general terms, the storage member may have as few as three readable points A, B and C to define its own two co-ordinate system, point A providing a datum or 'zero' for the two co-ordinates and the others providing, with the first, both the directions, and reference distances, for the respective co-ordinates, i.e. AB is a vector for one co-ordinate and AC a vector for the other. By scanning A, B and C, the co-ordination system can be ascertained and the actual value means calibrated accordingly.

In a preferred embodiment vector AB is simulated by a track or tracks extending in the first co-ordinate direction and providing machine readable absolute and incremental data for the first co-ordinate.

A second track extending in the first co-ordinate direction provides vector AC in conjunction with the first track or tracks. Thus, the first actual value means can be arranged to read an incremental scale carried by a storage member to define increments of distance in said one co-ordinate direction, there also being means for reading from a storage member a datum for the first and for the second co-ordinate.

In one embodiment a rotary support system is provided for the storage member. Then, said one co-ordinate may be an angular co-ordinate and the first actual value means comprises a reading head for reading an annular track of the storage member substantially co-axial with the centre of rotation.

In one embodiment, the recording apparatus also includes reading means and said processing means includes a reading structure having an optical system for use in producing an image of information from individual areas of said optical data storage zone.

Preferably, the individual areas contain analogue images and the storage member has a digital control data zone distinct from the information storage zone and containing digital indexing data for indexing the individual areas, i.e. the indexing data comprises classification codes and associated addresses for the storage zone areas.

In a preferred embodiment, the processing means includes means for use in applying an optical image to individual, light sensitive, areas of the information storage zone. Preferably, the processing means is also operable to record the above-mentioned digital indexing data in a digital control data zone distinct from the optical data storage zone.

A consequence of the first aspect of the invention is the feature that the storage members can store

-5-

more information because positional control areas described in the above mentioned European Application can now be dispensed with and used to store information in a continuous zone unbroken by control data tracks.

Thus, according to a second aspect of the invention there is provided an optical data storage member having a first zone containing recording material for the storage of information which can be read optically, and a second, control data, zone that stores control data defining positional servo information in a first co-ordinate of a two-co-ordinate system of the storage member, the second zone extending substantially co-extensively with one side of the first zone and the first zone being uninterrupted by any positional control data.

The above-mentioned European Application discloses a system for measuring eccentricity in a disc-form storage member, this being equally applicable to a rectangular storage member where corrections for skew may be required. Correction is achieved using stored error values obtained from a pre-scan of a track of the storage member, which track extends in one co-ordinate direction. Preferably such correction is included in a recording system according to the first aspect.

Furthermore, the apparatus may comprise reading means arranged to be driven by the drive means to detect two readable elements spaced apart on the storage member in the direction of the second co-ordinate to provide calibration of the second actual value means.

For a better understanding of the invention

- 6 -

and to show how the same may be carried into effect, reference will now be made, by way of example, to the accompanying drawings, in which: ·

Figure 1 shows a schematic view in plan of a data storage member;

Figure 2 is a view of coded data on the member of Figure 1;

Figure 3 is a perspective view, partially cut-away, of a recorder;

Figure 4 is a plan view partially cut-away of the recorder;

Figure 5 is a cross-sectional view of a reading and recording head of the recorder of Figure 3; and

Figure 6 is a schematic view of a recorder for rectangular storage members.

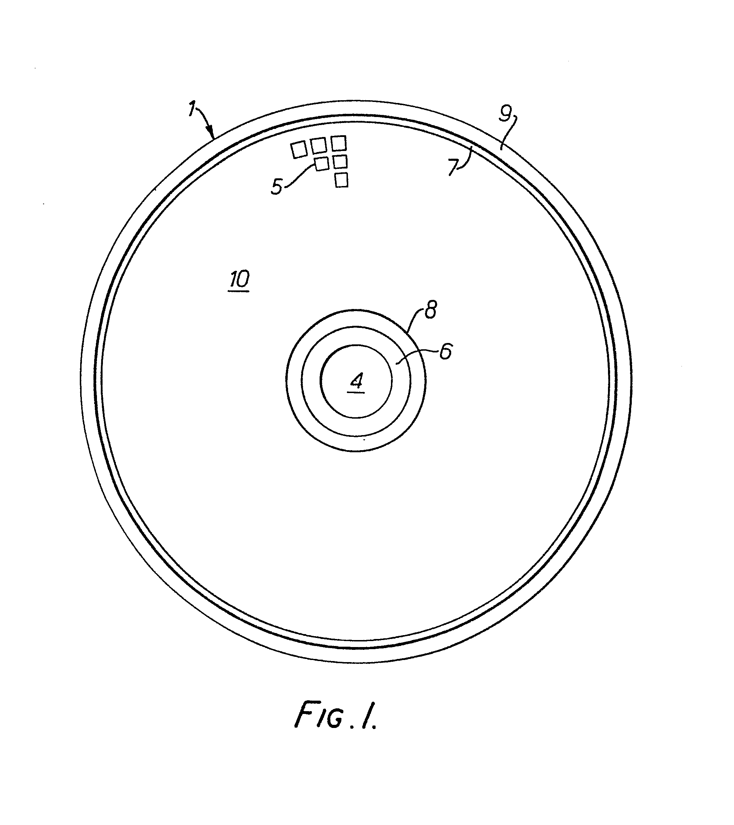

Figures 1 to 6 show an embodiment of an optical data storage system comprising optical data storage members in disc-form and an optical data reader and recorder.  All details shown in the figures relate to the reading features, and all details necessary for the recording features can be obtained from the above-mentioned PCT application.

Detailed information on construction can also be obtained from the above-mentioned Applications.

Figure 1 illustrates an example of an optical data storage member 1 in schematic plan.

The member 1 is a transparent circular disc of about 30 cm diameter substantially as described in the above-mentioned PCT application.

A hole 4 is provided in the central area of the disc for locating the disc 1 in the recorder The illustrated disc 1 has had recorded on it optically displayable information data and also control data. The information data is arranged on the disc 1 in a single zone 10 in substantially rectangular areas 5, each such area being referred to herein as a 'page' of data. These pages 5 are arranged in concentric circles. In principle, any arrangement of the pages is possible such as spiral, square grid or even random, but an arrangement with concentric circles enables a simpler control system to be provided to locate individual pages.

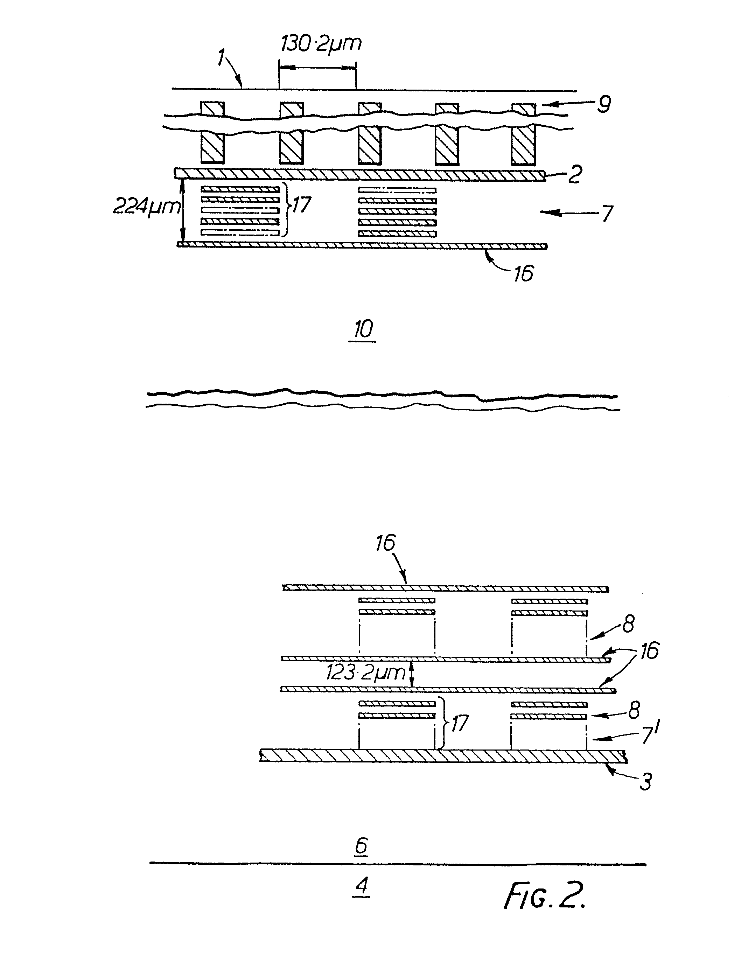

A central annulus 6 of about 5cm radius is left substantially free of data and circumferential tracks 7 and 9 are also provided, these carrying analog and/or digital coded page locating and control data. The control data is intended to be used by positional servos to provide page access. The form of this control data will be described later with reference to Figure 2. A track or tracks 8 of digital data is also shown and will be described later.

Figure 2 is a diagram of the control data tracks in developed form. Each 'bit' of data is hatched in this figure.

At the periphery is an incremental, angular position, track 9 consisting of a regular series of bits at a spacing of 130.2 μm and with a width of 2 to 3 μm. A fixed moire fringe transducer will continually monitor this track to provide an incremental angular measure of the travel of disc 1.

Below track 9 in the figure is the absolute angular position track 7 (an alternative position 7' is shown just above area 6). This track comprises a pair of guard rails 2 & 16, rail 2 being of about 1 mm width and rail 16 being of 5.6 μm width, between which rails is at least one set 17 of bits, each set being a radially extending 20 bit character comprising 16 data bits and 4 control bits, e.g. providing a check digit. Each set comprises hatched areas representing digital '1' and unhatched areas (shown dotted) representing digital 'O'. Preferably, there is one set aligned with each successive pair of bits in track 9. This track therefore defines the absolute angular disc position every 130.2 μm. Circular rails or tracks 2 and 16 serve the purpose of defining the limits of the data and also enable disc eccentricity to be measured. During one complete revolution of the disc the rail 2 can be scanned (identified by its width) and at every $n$th set of bits 17 an eccentricity value can be measured and stored to provide eccentricity compensation during servo position control (where $n$ is chosen according to the resolution required).

One or more data tracks 8 are also provided and have the same structure as track 7. The innermost track 8 is bounded by a wide rail 3 similar to rail 2.

It will be apparent that all these bits of Figure 2 could be provided as magnetic or photographically produced markers.

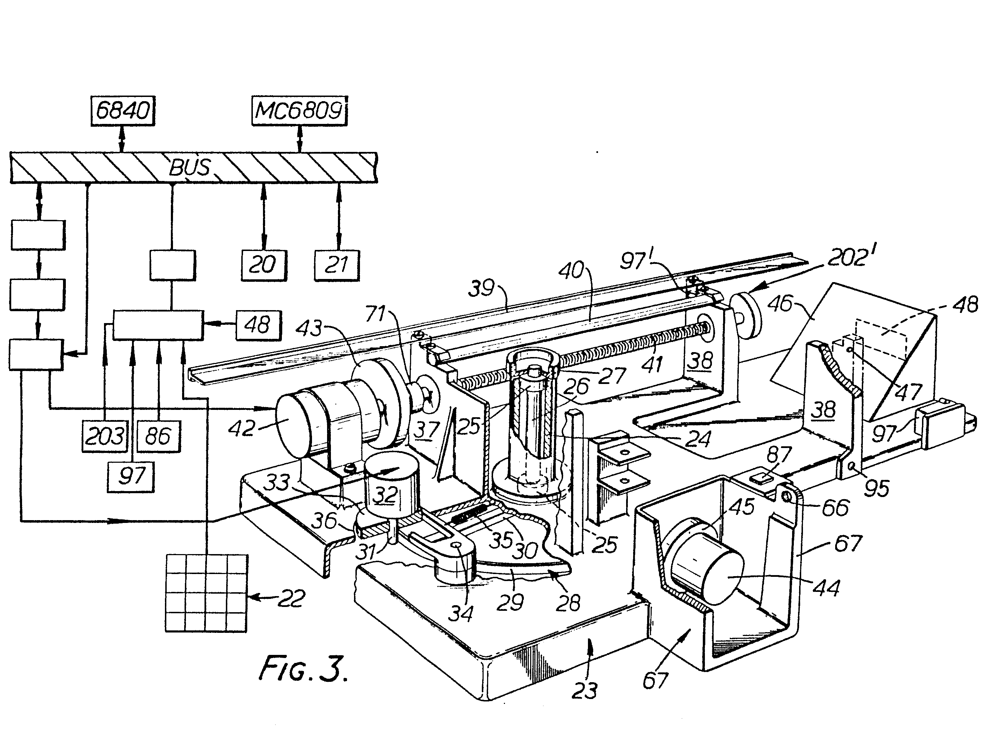

The reader/recorder itself will now be described with reference to Figures 3 to 5. However, it should be noted that these figures should be read in conjunction with the above-mentioned PCT Application to ascertain the image applying and developing features of this embodiment. The reader/recorder comprises a housing supporting a translucent screen and containing mirrors to project an image from the storage member onto the screen. An aperture is provided for the insertion of discs, and user input means, in the form of a keyboard, are provided for user control. Means (not shown) allow the presentation of documents to be recorded by the image applying means. On operating the keyboard, a tray will project from the aperture and a disc will be placed on the tray. Further operation of the keyboard will cause the tray to be pulled back into the housing.

Within the housing is a chassis 23 which will now be described with reference to the partially cutaway view in Figure 3, also showing a diagram of the associated electronic system.

Mounted on this chassis 23 is a vertically extending bearing tube 24 containing bearings 25 rotatably supporting a disc drive shaft 26 carrying at its upper end a cup-shaped member 27 which will engage the underside of a disc. The lower end of shaft 26 carries, below the floor of the chassis 23, a drive wheel 28 comprising a rubber-covered rim 29 supported by a plurality of spokes, one of which is shown at 30. The rim 29 engages the shaft 31 of a DC analog motor 32 having a flywheel 33. This provides a 1:40 coupling between the motor 32 and the drive shaft 26. The motor 32 is pivotally supported about an axis 34 and is biased by a spring 35 to urge the shaft 31 against the rim 29. The flywheel is mounted with clearance in an aperture 36 in the floor of the chassis.

A transverse wall 37 and two upstanding posts 38 provide four attachment points for various elements now to be described.

-10-

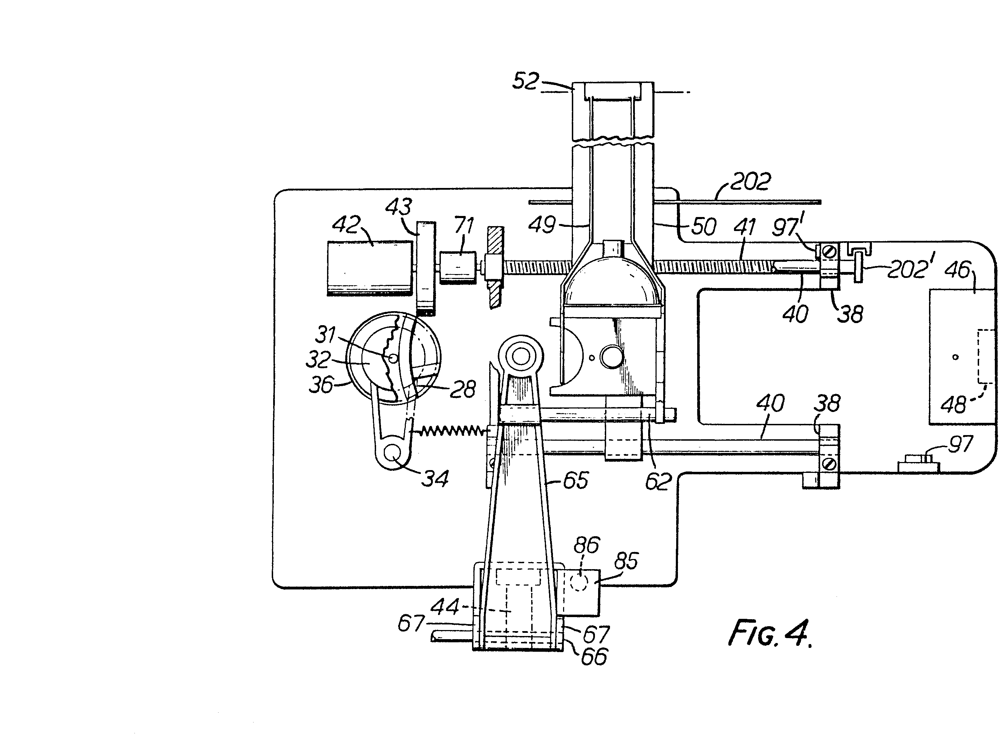

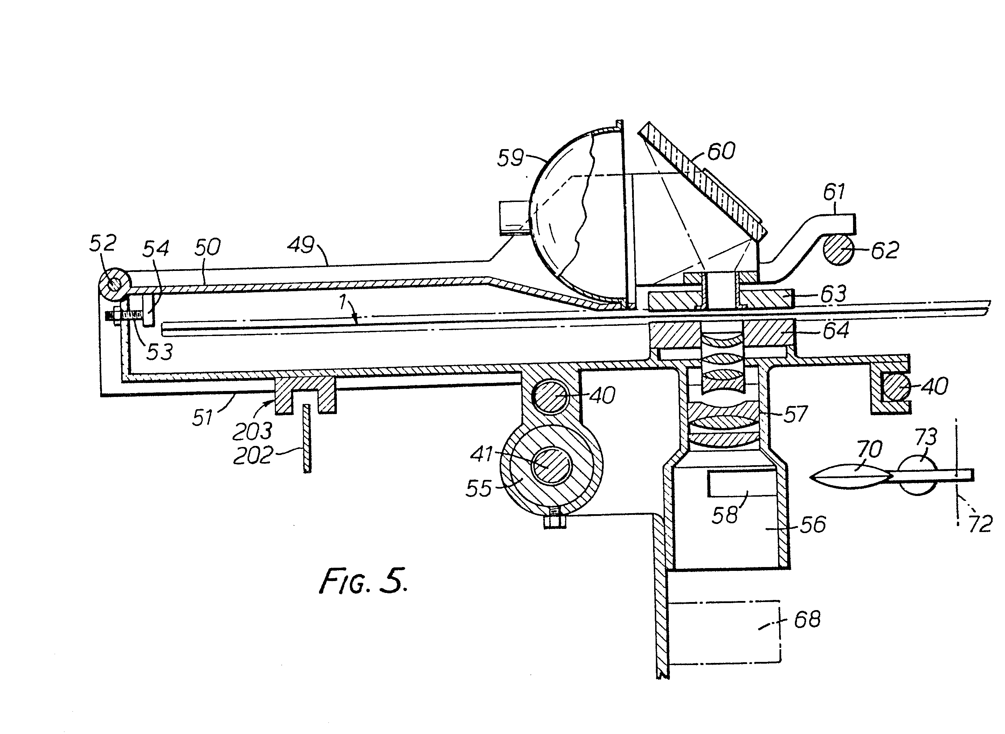

Firstly, the four attachment points support two rails, one of which is shown at 39, these rails providing a guide for the tray mentioned above. The attachment points also support two guide rods, one of which is shown at 40 and which provide guides for a reading/recording head, to be described later. Below the illustrated rod 40 is a lead screw 41 which is rotatably supported by one of the posts 38 and by the wall 37. This lead screw 41 will engage a threaded member attached to the reading head as will be described hereinafter. The lead screw 41 is driven by a DC analog motor 42 having a flywheel 43. An angle encoder 202' can be coupled to the lead screw to measure the movement of the head radially. Alternatively linear encoder 202 (Figures 4 and 5) may be employed.

Figure 3 also illustrates a further DC analog motor 44 with flywheel 45 the purpose of which is to act via a cam mechanism to actuate the tray and a disc clamping mechanism.

The chassis also supports a mirror 46 which will reflect images towards a screen. An aperture 47 is provided in the centre of mirror 46 to enable a portion of the light impinging on this mirror to pass through it to a photocell array 48, the purpose of which is to read the digital data in the tracks described above. This array 48 contains 256 individual photocells.

Details of the reader /recorder will now be further described with reference to Figures 4 and 5, Figure 4 being a partially cut-away plan view of the chassis shown in Figure 3 and with certain parts removed, and Figure 5 being a cross-sectional view of the reading head.

Figure 4 shows the guide rods 40 and the lead screw 41, all engaging the head generally designated 49. It also shows a linear encoder strip 202 read by a reading element 203 (Figure 5) carried by the head. The encoder is an alternative

-11-

to the angle encoder 202'.

The head 49 as shown in Figures 4 and 5 comprises two major parts, an upper arm 50 and a lower arm 51. Arm 50 is pivotally supported at 52 to the lower arm 51 and its horizontal orientation can be adjusted by way of a screw 53 which engages a stop 54 projecting from arm 50. The lower arm 51 is engaged by the lead screw 41 in screwthreaded engagement with a back-lash free nut arrangement 55. The rods 40 are also shown, in Figure 5, to be in sliding engagement with the lower arm. The lower arm 51 also carries a tube 56 which contains a set of projection lenses 57 and which also incorporates a slot 58 into which a further lens may be inserted to alter the optical characteristics of the path, in particular to adapt the magnification of the optical path for scanning the digital data by means of the photocell array 48.

The upper arm 50 supports a light source 59 comprising an ellipsoidal reflector. Illumination from the light source 59 is reflected downwardly by means of a mirror 60, carried by arm 50, through disc 1 to the lenses 57.

An air bearing arrangement comprising air bearing members 63 and 64 is also provided to enable the relatively flexible disc 1 to be stabilised in the area being imaged in order correctly to focus the image relative to the optical system.

The operation of the system will now be described. This operation is fundamentally as described in European Application No.81300321.7 as applicable to the recorder as described in PCT Application No. GB/82/00179.

A microprocessor 19 includes a memory 20 containing program data which defines the fundamental operation of the reader/recorder, and a memory 21

-12-

into which data can be fed from a disc. Further details of the microprocessor system of Figure 3 can be obtained from the above-mentioned European application.

Having inserted a disc, the head will be displaced to its radially outermost position, detected by a limit switch 97 (Figure 3), whilst the disc is being rotated at constant speed. The head is then displaced until wide rail 2 is detected, in order that the system may scan the track 7. In this condition, data from the photocell array, with decoder, 48 will be received by the microprocessor 19. The width of this array is more than sufficient to encompass the radial width of band 7, so that, within certain limits of eccentricity, the whole of the band can be imaged onto the photocell array. According to the amount of eccentricity at any particular angle, a different set of photocells will have the image of bit sets 17 imaged upon them. The microprocessor will be able to detect which cells, if any, have the guard rails imaged upon them and from this will determine three factors. Firstly, it will determine whether or not both rails are within the range of the array and, if not, will adjust the radial position of the head accordingly. Secondly, it will determine the actual value of eccentricity at that given angular position and will store that value in memory 21; alternatively, eccentricity can be measured directly from rail 2. Thirdly, it will be able to ascertain which photocells are in a position corresponding to the positions of the twenty bits of a set 17. These particular photocells will be read by the microprocessor to establish the individual bit values. In particular, if it is ascertained that, say, a known group of eight photocells of the array have a position corresponding to a given bit, then, say, the output from the middle four photocells of that set will be averaged to obtain the bit value. Further angular position measurement can now be effected by way of the transducer 86, 87 reading track 7, because this transducer operates when the head is withdrawn away from the track 7.

Radial motion of the head will be determined under servo control from encoder 202 or 202'. Initially, such control will be to move the head to inner track 8 (detected by detecting rail 3) to read the sets of data bits contained therein in a serial manner. It is to be noted that having detected rails 2 and 3, the distance between them can be measured and stored to calibrate the encoder 202 (202') to compensate for discrepancies between the radial coordinate system of the disc and that implied by the encoder 202 (202'). Returning now to the reading of track 8, a first group of characters or words in track 8 will be read into the micro -

processor system so that the system may ascertain the type of disc, in particular whether or not any index track is provided, whether or not any programming track is provided and whether or not there is any "title" or "menu" page to be accessed initially. It is pointed out here that one or more tracks 8 may be provided with program data which defines the manner in which the apparatus, as a reader, should respond to data indexing information, and such programming information will be read into memory for subsequent use during reading of the disc.

If the data read from the track or tracks 8 defines an initial page to be displayed or recorded, the microprocessor will calculate the address co-ordinates of the page and drive the disc under servo control using data from encoder 202 (or 202') and data from track 9 to obtain actual value data. It is noted that when this stage has been reached, the head will have been set to image or record the page concerned, so the microprocessor system will have ceased reading data from the photocell array 48, and will have withdrawn lens 70 to enable that page to be displayed or recorded by way of the optical system. Thus, radial and angular servo control positioning is under control of the transducer 86,87 and encoder 202 (202') in conjunction with the motors 42 and 32.

In one scheme, the individual pages, for location after recording, have page numbers running from say, 1 to 9000 and the operator may input that page number to access the corresponding page. The microprocessor will decode that page number into a corresponding radial co-ordinate value and angular co-ordinate value for page searching in the manner briefly described above.

An alternative method of access is via indexing, as described above.

A further function implemented by the microprocessor is a focussing adjustment to compensate for focussing differences between reading track 7 and tracks 8 at different radii, when the difference in optical path length to array 48 would provide a badly focussed image at array 48 at some radii. The disc is supported out of contact with moving parts by an air bearing with an adjustable air pressure. Accordingly, during reading by array 48, the microprocessor adjusts the air pressure according to the radial position of head 49.

An alternative method is to provide a different optical path for array 48. In this case solenoid 73 will put into the path a weakly negative lens and a mirror, the mirror directing light to an arrangement mounted on the chassis and comprising lens 70 and array 48 a fixed distance apart. The negative lens will provide compensation for the variations in distance between it and lenses 57 as the head moves radially.

It has been indicated above that a digital track 8 could be provided so as to contain indexing information. Moreover digital programming information can be stored to provide the apparatus with software particularly adapted to handle the indexing data that is provided on the same disc. In this way a variety of types of indexes can be made compatible with a single embodiment of reader/recorder by having the apparatus effectively reprogrammed in part each time a disc is loaded.

All this may be as described in the above-mentioned copending Applications.

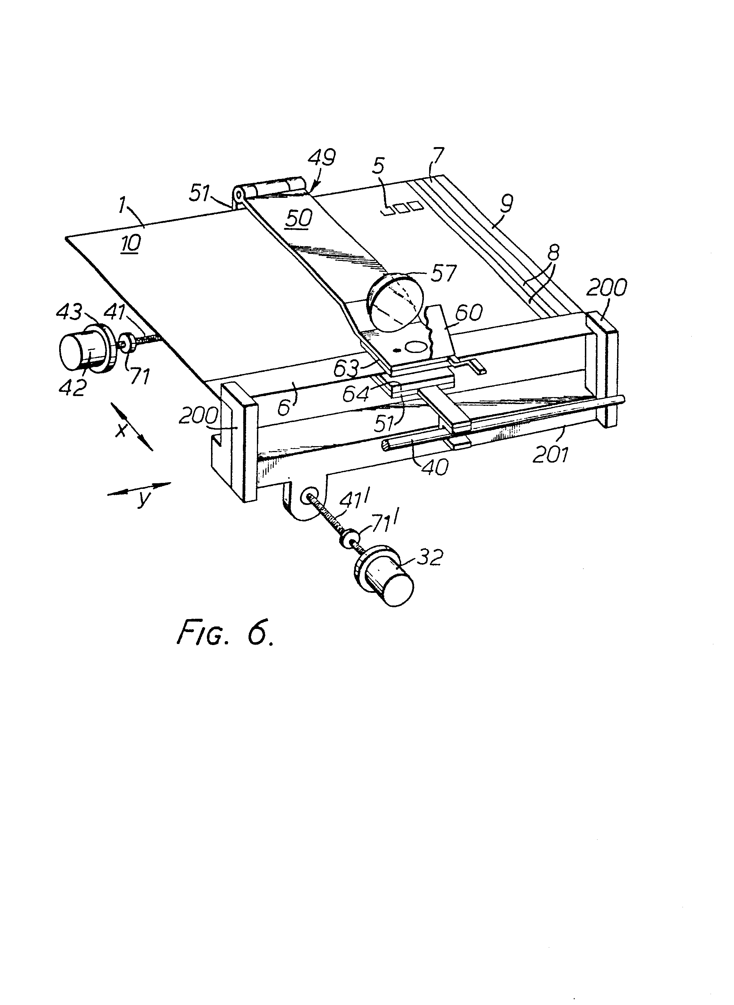

Finally, Figure 6 illustrates schematically a modification in which an x,y (orthogonal) coordinate system is used for a            recorder.

-16-

Where elements of Figure 6 correspond to elements in the embodiment described above, the same reference numerals are used.

In this embodiment, the storage member is a planar, rectangular, sheet 1 having x,y axes, position in the y co-ordinates being given absolutely by digital track 9. Adjacent track 9 are a linear incremental y track 7 and digital data tracks 8. The sheet 1 contains a single information storage zone 10 containing 'pages' 5 of analog information. A strip 6 is left free of data to provide a clamping zone. Strip 6 is releasably clamped at two points by elements 200 carried by a carriage 201 slidably movable in the x direction. Carriage 20' is engaged by lead screw 41' driven, via universal joint 71', by motor 32.

head 49 is precisely as shown in Figures 4 and 5, except that no semicircular cut-out is required to accommodate the central support of a disc. Thus, air bearings 63, 64, source 59,mirror 60 and all other items as shown in Figure 5 are provided. Lead screw 41 again is coupled to motor 42 by universal joint 71 and flywheel 43. Electronic and optical system remain as shown in preceding figures.

As indicated above, Figures 3 to 6 are to be interpreted as applying to a recording apparatus, the head 49 being considered to be the means for applying images to the storage member and if appropriate image developing means are added.

The information storage zone 10 of a storage member is of photographically or electrophotographically processible material.

In a further embodiment of recording

-17-

apparatus, head 49 is pivotally mounted about a vertical axis, motor 42 then driving the vertical optical axis through lenses 57 along an arcuate path. The existing co-ordinate system could nevertheless be maintained. However, another possibility in that case is to replace the radial (or y-) co-ordinate by an arcuate co-ordinate having a component in the radial (or y-) direction.

With regard to eccentricity or skew correction in a            recording apparatus, a smaller array 48 can be used if radial (or y-) motion is effected always to align the array with the track 7. A number of eccentricity readings can be taken at different angular (or x-) positions, the eccentricity being measured by the particular photocells on which the control track 7 is imaged in combination with a radial motion required to position the track in the field of view of the array 48.

Further, whatever means are employed to measure eccentricity or skew, a correction is preferred, in dependence upon that error, in both co-ordinate directions not just in the direction used in measuring the error, i.e. angular and radial address correction is required in the case of an eccentric disc. Thus, the microprocessor includes software designed to take this factor into account.

One method of correcting for eccentricity or skew errors is to provide on the optical storage member an outer datum and an inner datum which are located on a common radius, the inner datum preferably being close to the centre of the member and the outer datum preferably being close to the periphery thereof. In the present embodiment, these datum are the two wide rails 2 and 3 (Figure 2). If the storage member were properly shaped and positioned in the apparatus, the two data would be at predetermined locations. Thus compensation can be

0099651

8-

achieved by observing the inner datum and the outer datum; comparing the observed positions with the predetermined positions equivalent to perfect shape and positioning of the member; and deriving therefrom (by interpolation or, less preferably, extra-polation) correction functions for all parts of the optical storage member. Thus isotropic and anisotropic errors can be corrected.

European Patent Application No. 82303767.6, from which the present application is divided discloses above-described features in relation to reading apparatus as well as recording apparatus.

CLAIMS:

1.    An optical data recording apparatus for applying images to information storage areas (5) in an optical data storage zone (10) of an optical storage member (1), the apparatus comprising processing means (49) for use in applying images to said areas (5) of the storage zone (10), and drive means (32,42) for producing relative motion between the storage member (1) and the processing means (49) to position the processing means to process any desired one of said areas (5), characterised in that the processing apparatus comprises desired value means (22) for defining desired values for the first and second co-ordinates of an area (5) to be processed, first actual value means (86) for reading control data (7,9) provided by a storage member to define an actual value for the relative motion in one co-ordinate direction, second actual value means (203) for reading incremental positional control data (202), which is independent of the storage member, to define an actual value for the relative motion in the other co-ordinate direction, and servo means (Figure 3) for operating the drive means (32,42) in dependence upon the desired and actual values to cause the processing means to be positioned relative to the storage member for processing the area(s) defined by the desired values.

2.    Apparatus according to claim 1, wherein the first actual value means (86) is arranged to read an incremental scale carried by a storage member to define increments of distance in said one co-ordinate direction, there also being means (49,48) for reading from a storage member a datum for the first and for the second co-ordinate.

-20-

3.      Apparatus according to claim 1 or 2, wherein the drive means (32,42) are operable to produce relative rotational motion between a storage member and the processing means.

4.      Apparatus according to claim 3, wherein the co-ordinates are polar co-ordinates.

5.      Apparatus according to claim 4, wherein said one co-ordinate is an angular co-ordinate and the first actual value means comprises a reading head (86) for reading an annular track of the storage member substantially co-axial with the centre of rotation.

6.      Apparatus according to any one of the preceding claims, comprising means (49,48) for reading an absolute value track (7) of a storage member defining at least one absolute value for the first co-ordinate.

7.      Apparatus according to claim 2, or to any one of claims 3 to 6 when appended to claim 2, and comprising means (48,49) for reading a track (2) extending in the direction of the first co-ordinate and defining a datum for the second co-ordinate.

8.      Apparatus according to any one of the preceding claims and comprising reading means (49,48) arranged to be driven by the drive means for effecting a scan of a track (2) of the storage member extending in the first co-ordinate direction to ascertain any error between said direction of the storage member and the corresponding direction defined by the drive means to produce error compensation during operation of the servo means.

9.      Apparatus according to any one of the preceding claims and comprising reading means (49,48) arranged to be driven by the drive means to detect two readable elements (2,3) spaced apart on the storage member in the direction of the second co-ordinate to provide calibration of the second actual value means (202,203).

10.     Apparatus according to any one of the preceding claims, wherein the desired value means comprise means (49,48) for reading a digital data zone (8) distinct from the storage zone (10) of a storage member, the digital data zone comprising indexing data including addresses providing said desired values.

11.     Apparatus according to any one of claims 6 to 10. wherein the reading means (49,48) comprises an input portion (59,60,57) arranged to be moved relative to a storage member, the input portion being carried by the processing means.

12.     Apparatus according to claim 11, wherein the input means comprises an optical portion of the processing means.

13.     Apparatus according to any one of the preceding claims, wherein the processing means (49) comprises a reading head for optically imaging said area(s) of a storage member.

14.     An optical data storage member (1) having a first zone (10) containing recording material for the storage of information which can be read optically and a second control data, zone (7,9) that stores control data defining positional servo information in a first co-ordinate of a two-co-ordinate system of the storage member, the second zone extending substantially

-22-

co-extensively with one side of the first zone and
the first zone being uninterrupted by any
positional control data.

15.　A storage member according to claim 14,
wherein the second zone has means (7)
defining a datum for the first co-ordinate and
means (2) defining a datum for the second co-ordinate.

16.　A storage member according to claim 14 or 15,
wherein the second zone has means (9) defining
incremental positional information for the first
co-ordinate.

17.　A storage member according to any one of
claims 14 to 16, and comprising means (2,3)
defining a dimension in the second co-ordinate direction.

FIG. 1.

FIG.2.

Fig. 3.

FIG. 4.

Fig. 5.

FIG. 6.